# EUROPÄISCHE PATENTSCHRIFT

(11) **EP 3 686 700 B1**
(45) Veröffentlichungstag und Bekanntmachung des Hinweises auf die Patenterteilung: **16.12.2020**
(21) Anmeldenummer: 18186145.1
(22) Anmeldetag: 27.07.2018
(51) Int. Cl.: G05B 23/02

(54) **VERFAHREN ZUR ÜBERWACHUNG EINER AUTOMATISIERUNGSANLAGE**
METHOD FOR MONITORING AN AUTOMATION SYSTEM
PROCÉDÉ DE SURVEILLANCE D'UNE INSTALLATION D'AUTOMATISATION

(43) Veröffentlichungstag der Anmeldung: 29.07.2020
(73) Patentinhaber: Eisenmann SE, 71032 Böblingen (DE)
(72) Erfinder: Ochs, Ullrich, Holzgerlingen 71088 (DE); Stumpfegger, Thomas, San Jose, CA California 95134 (US); Häußler, Fabian, 71034 Böblingen (DE)
(74) Vertreter: 2K Patentanwälte Blasberg Kewitz & Reichel

(56) Entgegenhaltungen:
- EP-A2- 2 320 396
- US-A1- 2014 245 232
- US-A1- 2017 315 696
- US-B2- 7 817 150

## Beschreibung

Die Erfindung betrifft ein Verfahren zur Überwachung einer Automatisierungsanlage mit einer Vielzahl von Komponenten, umfassend: Rendern, durch einen Prozessor, eines Bildes aus einer zumindest einen Teil der Automatisierungsanlage darstellenden, dreidimensionalen Szene auf Basis von Positionsdaten und Blickrichtungsdaten, Darstellen des Bildes auf einer Anzeigeeinheit. Sie betrifft weiter ein Computerprogrammprodukt und ein Leitsystem.

Automatisierungsanlagen sind Industrieanlagen, in denen Produktions- und Verarbeitungsschritte voll- oder teilautomatisiert erfolgen. Je nach Art der hergestellten oder verarbeiteten Produkte kann eine Automatisierungsanlage höchst individuell ausgestaltet sein. In der Regel besteht sie jedoch aus Verarbeitungsstationen, zu denen die zu verarbeitenden Produkte oder deren Vorstufen mittels einer Fördereinrichtung in einer bestimmten Abfolge gebracht und dort bearbeitet werden. Die Fördereinrichtung umfasst dabei verschiedene bekannte Förderelemente wie z.B. Aufzüge, Transportbänder etc. Dabei können die entweder zur Verarbeitungsstation gebracht und dort entnommen und verarbeitet werden, oder aber kontinuierlich durch eine Verarbeitungsstation gefördert und währenddessen auf dem jeweiligen Förderelement verarbeitet werden. Verarbeitungsstationen und Fördereinrichtung bilden die Komponenten der Automatisierungsanlage. Eine solche Automatisierungsanlage ist z.B. eine Lackierlinie für Kraftfahrzeuge. Die Verarbeitungsstationen sind in diesem Fall Stationen an denen eine spezifische, im Lackierprozess vorgesehene Aufgabe durchgeführt wird, d.h. Vorbehandlung, Aufbringen von Grundierung, Füller, Basislack und Klarlack. An jeder Station sind hierfür entsprechende Maschinen wie z.B. Lackierroboter vorhanden. Die Fahrzeugkarossen werden automatisiert mittels bekannten Förderelementen von Station zu Station gebracht.

Die Steuerung und Überwachung einer Automatisierungsanlage erfolgt typischerweise an einem Leitstand, wo unter Mitwirkung eines Benutzers mittels entsprechender Daten aus der Anlage die Prozessabläufe überwacht und ggf. beeinflusst werden. Ein Leitstand verfügt hierzu über ein oder mehrere Geräte oder Verbindungen zu Geräten an den verschieden Stationen der Automatisierungsanlage zum Messen, Regeln, Steuern, Anzeigen, Alarmieren, Registrieren, Schalten oder Rechnen. Die Anzeige des Prozesses z.B. in der Art von Schaufließbildern erfolgt hierbei in der Regel über verschiedene Anzeigeeinheiten wie z.B. Bildschirme. In neuester Zeit bietet sich durch das Aufkommen mobiler Geräte wie z.B. Tablets und Laptops auch die Möglichkeit der Anzeige und Steuerung von Prozessen auf solchen mobilen Geräten, wobei der Benutzer sich frei in der Automatisierungsanlage bewegen kann. Auch ist es möglich, eine Fernüberwachung der Anlage durchzuführen, so dass sich Leitstand oder mobiles Gerät nicht notwendigerweise im Nahbereich der Automatisierungsanlage befinden müssen.

Größtenteils werden Automatisierungsanlagen auf den Anzeigeeinheiten zur Zeit durch zweidimensionale Darstellungen gezeigt. Produkte und deren Bestandteile werden oft nur angedeutet. Sofern dreidimensionale Darstellungen verwendet werden, sind diese oft statisch und zeigen eine pseudoperspektivische Sicht (oft auch als 2½-D bezeichnet). Eine derartige Darstellung ist für den Benutzer gerade auf mobilen Geräten vor Ort in der Anlage häufig wenig intuitiv.

In jüngster Zeit wird daher dazu übergegangen, auf der Anzeigeeinheit die Automatisierungsanlage in echter dreidimensionaler Darstellung inklusive aller Maschinen, Fördereinrichtung sowie aller Produkte vor und nach dem Zusammenbau aller Einzelteile darzustellen. Entsprechende Verfahren sind dem Fachmann beispielsweise aus der US 6,282,455 und der US 7,817,150 B2 bekannt. Die entsprechenden Techniken des 3D-Renderings oder der 3D-Bildsynthese sind dem Fachmann ebenfalls bekannt. Grundlage hierfür bildet eine datenseitige dreidimensionale Beschreibung der Komponenten der Automatisierungsanlage, die idealerweise maßstabsgetreu ist. Die Summe dieser Daten wird als Szene bezeichnet. Die Modellierung der Komponenten und ihrer Subelemente der Automatisierungsanlage innerhalb der Szene erfolgt mittels geometrischer Modellierung. Die entsprechenden Daten werden dann in einen geeigneten Grafikprozessor geladen und dort wird dann zusammen mit Positions- und Blickrichtungsdaten, die die Position und die Blickrichtung eines Betrachters in Bezug zur Szene angeben, mit bekannten Methoden der Computergrafik ein Bild der Automatisierungsanlage bzw. des im Blickfeld liegenden Teils der Automatisierungsanlage mit ihren Komponenten gerendert.

Allgemeine, d.h. nicht Automatisierungsanlagen-bezogene Verfahren und Systeme in Bezug auf 3D-Rendering sind dem Fachmann beispielsweise aus der US 2014/0245232 A1, der EP 2 320 396 A1 oder der US 2017/315696 A1 bekannt. Im Bereich von Leitständen für Automatisierungsanlagen ergibt sich hierbei jedoch das Problem, dass die darzustellende Informationsdichte immens ist, andererseits aber die Darstellungsgröße des Bildes begrenzt, insbesondere wenn mobile Anzeigeeinheiten verwendet werden sollen. Insbesondere bei größeren Anlagen stellt es sich schwierig dar, einerseits sämtliche Informationen für den Benutzer darzustellen, andererseits aber den Benutzer auch nicht mit möglicherweise für den momentanen Zweck nutzlosen Informationen zu überfrachten. Bei der maßstabsgetreuen dreidimensionalen Darstellung ergibt sich zudem das Problem, dass gegebenenfalls der Blick auf für den Benutzer momentan interessante Komponenten durch andere Komponenten verdeckt wird.

Es ist daher Aufgabe der Erfindung, ein Verfahren der eingangs genannten Art anzugeben, mit welchem auch auf einem vergleichsweise kleinen Anzeigegerät eine Überwachung der Automatisierungsanlage unter Darstellung sämtlicher relevanter Informationen ermöglicht wird.

Diese Aufgabe wird erfindungsgemäß dadurch gelöst, dass die Komponenten über eine Mehrzahl von Geschossen der Automatisierungsanlage verteilt sind und die Komponenten in der dreidimensionalen Szene jeweils auf einem Geschoss angeordnet sind, ein den Geschossen zugeordnetes Eingabeelement vorgesehen ist, wobei abhängig von einer Eingabe am Eingabeelement ein vertikaler Abstand zwischen zwei benachbarten Geschossen in der dreidimensionalen Szene verändert wird, und wobei Materialwege zwischen Komponenten der Automatisierungsanlage als Linien in der Szene dargestellt werden, wobei zumindest eine Linie einen Materialweg zwischen den benachbarten Geschossen darstellt, und wobei, wenn der vertikale Abstand zwischen den zwei benachbarten Geschossen in der dreidimensionalen Szene verändert wird, auch die Länge der Linie dementsprechend verändert wird.

Die Erfindung geht dabei von der Überlegung aus, dass insbesondere bei der dreidimensionalen Darstellung solcher Automatisierungsanlagen, die mehrgeschossig ausgebildet sind, die oben skizzierte Problematik erheblich ist: Will der Benutzer beispielsweise Komponenten in einem größeren Bereich auf einem unteren Geschoss überwachen, so wird in der dreidimensionalen Darstellung bei einer aufsichtigen Blickrichtung und entsprechend entfernter Position das darüber liegende Geschoss den Blick auf den gewünschten Bereich verdeckt. Eine Verringerung des Abstandes, d.h. ein Hereinzoomen auf den gewünschten Bereich zur Vermeidung des Verdecken kann problematisch sein, da hierdurch das Sichtfeld verkleinert wird. Information geht im Sichtfeld verloren. Auch eine Reduzierung der Darstellung auf das gewünschte Geschoss durch Ausblenden oder z.B. seitliches Wegschieben des darüber liegenden Geschosses kann problematisch sein, da auch hier ggf. Information verloren geht, da Interaktionen des interessierenden Bereichs mit dem darüber liegenden Stockwerk wie z.B. Materialwege nicht mehr darstellbar sind. Eine unabhängige Darstellung beider Geschosse hingegen macht entweder weitere Bildschirme notwendig oder aber eine Aufteilung des vorhandenen Bildschirms, wobei wegen der reduzierten Größe jedes einzelnen Teilbilds wiederum Detailgrad verloren geht. Vor diesem Hintergrund wurde erkannt, dass eine vollständige Darstellung ohne Detail- oder Informationsverlust auf dem vorhandenen Bildschirm möglich wird, wenn in Abkehr von der eigentlich beim dreidimensionalen Rendering gewünschten Maßstabstreue der Darstellung der vertikale Abstand zwischen zwei benachbarten Geschossen auf eine Benutzereingabe hin veränderbar ist. Hierfür sollte ein geeignetes Eingabeelement vorgesehen werden, das ggf. auch graphisch auf der Anzeigeeinheit realisiert sein kann. Hierdurch wird eine größere Flexibilität der Darstellung erreicht, die es ermöglicht, einerseits einen freien Blick in der dreidimensionalen Darstellung des Bilds auf einen gewünschten Bereich zu geben, andererseits aber keinerlei Information z.B. hinsichtlich der Interaktion von Komponenten der Automatisierungsanlage mit Komponenten auf benachbarten Geschossen zu verlieren.

Darüber hinaus werden Materialwege zwischen Komponenten der Automatisierungsanlage als Linien in der Szene dargestellt. Diese Linien werden dann ebenfalls im Bild gerendert. Materialwege meint hierbei sowohl automatisierte Wege wie z.B. Förderbänder oder Leitungen, als auch manuelle betriebene Wege wie z.B. Fahrwege von durch Menschen bedienten Transportwagen. Hierdurch werden Interaktionen zwischen den einzelnen Komponenten und Abhängigkeiten hinsichtlich des Materialflusses unmittelbar sichtbar. Stellt dabei zumindest eine Linie einen Materialweg zwischen den benachbarten Geschossen dar, wird, wenn der vertikale Abstand zwischen den zwei benachbarten Geschossen in der dreidimensionalen Szene verändert wird, auch die Länge der Linie dementsprechend verändert. Mit anderen Worten: Bei einer Veränderung des Abstandes zwischen den Geschossen in der oben beschriebenen Weise bleibt die Sichtbarkeit der Materialwege erhalten, indem beide Geschosse verbindende Linien, die einen geschossübergreifenden Materialweg darstellen, entsprechend verlängert werden. Der Begriff Linie bezeichnet hier jegliche im Wesentlichen eine Verbindung zwischen zwei Punkten anzeigende Struktur wie z.B. Balken, zylindrische Röhren oder Bänder. Die genaue graphische Ausgestaltung kann somit unterschiedlich sein.

In vorteilhafter Ausgestaltung des Verfahrens ist mittels des Eingabeelements eines der Geschosse auswählbar und der vertikale Abstand des ausgewählten Geschosses zum darüber liegenden Geschoss wird verändert. Hierdurch ist für den Benutzer in besonders einfacher Weise eine Beeinflussung der Ansicht auf einen Bereich mit Komponenten des für ihn relevanten Geschosses möglich.

In einer besonders vorteilhaften Ausgestaltung des Verfahrens umfasst das Eingabeelement ein stationäres Zeigerelement und eine darunter bewegbare Abschnittsskala, wobei jedem der Abschnitte ein Geschoss zugeordnet ist, und ein Geschoss ausgewählt wird, indem der diesem Geschoss zugeordnete Abschnitt unter das Zeigerelement bewegt wird. Ein solches Eingabeelement kann insbesondere graphisch auf der Anzeige realisiert sein, indem die Abschnittsskala in der Art einer Scroll-Leiste ausgebildet ist und z. B. aus übereinanderliegenden Rechtecken besteht, die die Abschnitte bilden, die jeweils einem Geschoss zugeordnet sind. Durch Bewegen der Scroll-Leiste per Mausklick oder - am berührungsempfindlichen Bildschirm - per Wischgeste kann das jeweilige Geschoss ausgewählt werden.

Vorteilhaft wird bei den oben beschriebenen Verfahren der vertikale Abstand der Geschosse gegenüber dem maßstabsgerechten Abstand in der realen Automatisierungsanlage vergrößert, so dass der Blick auf darunterliegende Geschosse in der dreidimensionalen Darstellung frei wird.

In noch weiterer vorteilhafter Ausgestaltung des Verfahrens wird mittels des Eingabeelements innerhalb eines vorgegebenen Bereiches ein beliebiger vertikaler Abstand eingestellt. Mit anderen Worten: Dem Benutzer wird die Möglichkeit gegeben, nicht nur zu entscheiden, zwischen welchen benachbarten Geschossen der Abstand verändert werden soll, sondern auch wie weit dieser Abstand verändert werden soll, d. h. z. B. auf den doppelten oder dreifachen maßstabsgetreuen Abstand. In der oben beschriebenen Ausgestaltung mit einer Abschnittsskala kann dies beispielsweise dadurch realisiert sein, dass das Maß der Abstandsvergrößerung dadurch bestimmt wird, in welchem Teil des einem Geschoss zugeordneten Abschnitts sich das Zeigerelement befindet.

In noch weiterer vorteilhafter Ausgestaltung des Verfahrens wird in der Szene die aktuelle Position eines Materials auf den Materialwegen dargestellt. Mit anderen Worten: In der dreidimensionalen Szene werden nicht nur die statischen Materialwege, sondern auch Informationen bezüglich der aktuellen Position von auf diesen Materialwegen transportierten Materialien hinterlegt, mit gerendert und somit im Bild in Echtzeit dargestellt. Echtzeit meint hierbei im Folgenden, dass die dargestellten Prozesse im Wesentlichen simultan mit den in der Realität ablaufenden Prozessen stattfinden, wobei natürlich stets eine gewisse Verzögerung hinsichtlich der Signalverarbeitung auftreten wird und zudem nur diskrete Informationen z.B. hinsichtlich der Materialposition vorliegen, so dass zwischen einzelnen diskreten Informationszeitpunkten ggf. ein Wert für die Darstellung (z.B. Position des Materials) extrapoliert werden muss. Eine solche Ausgestaltung ist auch unabhängig von der oben beschriebenen Veränderbarkeit der Abstände zwischen den Geschossen möglich und wird hiermit daher explizit auch unabhängig davon offenbart. Sofern sie aber in Kombination mit der oben beschriebenen Veränderung der Geschosse zur Anwendung kommt, muss dabei die Geschwindigkeit der Materialien auf den verlängerten Verbindungslinien entsprechend erhöht werden, so dass Verlassen des einen Geschosses und Ankunft auf dem anderen Geschoss synchron mit der Realität bleiben.

In einer weiteren vorteilhaften Ausgestaltung des Verfahrens, die ebenfalls unabhängig von der oben beschriebenen Veränderbarkeit der Abstände zwischen den Geschossen möglich ist und explizit auch unabhängig davon offenbart wird, werden die Positionsdaten automatisch in einem festen Abstand zur aktuellen Position des Materials bestimmt. Mit anderen Worten: Die Positionsdaten (und ggf. auch die Blickrichtungsdaten) werden vom Benutzer nicht frei gewählt, sondern anhand der aktuellen Position eines bestimmten, ggf. vom Benutzer gewählten Materials ausgewählt. Insbesondere beim kontinuierlichen Echtzeit-Rendering (siehe unten) folgt die Ansicht dann der Echtzeit-Bewegung des Materials durch die dreidimensionale Ansicht der Anlage.

Im Folgenden werden drei weitere vorteilhafte Ausgestaltungen des oben beschriebenen Verfahrens erläutert. Obwohl sich diese synergistischen Effekte mit der oben beschriebenen Ausgestaltung mit veränderbaren Abständen zwischen Geschossen bieten, sind sie grundsätzlich auch unabhängig davon realisierbar und werden damit auch explizit nur in Verbindung mit dem eingangs genannten Oberbegriff offenbart.

Vorteilhafterweise wird auf eine Benutzereingabe der Abstand von Teilen einer Komponente zueinander in der dreidimensionalen Szene vergrößert. Mit anderen Worten: Es erfolgt auf die Benutzereingabe hin in der dreidimensionalen Darstellung ein - bevorzugt fließender - Übergang zu einer Explosionsdarstellung, in der die Teile der ausgewählten Komponente mit größerem Abstand zueinander im gerenderten Bild dargestellt werden. Dadurch kann der Benutzer die Funktion und den Zusammenbau von Komponenten erkennen sowie einzelne Bauteile bestimmen. Durch einen fließenden Übergang bleibt für den Benutzer die Orientierung erhalten.

Weiterhin wird vorteilhaft in der dreidimensionalen Szene im Bereich einer Komponente eine dreidimensionale Graphik angeordnet, wobei die Graphik eine aktuelle Darstellung einer zweidimensionalen Kennkurve der Komponente zusammen mit historischen Darstellungen der Kennkurve enthält, die in der dritten Dimension hintereinander angeordnet sind. Durch die Verwendung einer echten, dreidimensional gerenderten Abbildung ist es nämlich zum einen möglich, die in der dreidimensionalen Szene hinterlegten Komponenten, die real in der Automatisierungsanlage existieren, mit zusätzlichen, nicht real existierenden Objekten anzureichern, die Informationen über die jeweilige benachbarte Komponente darstellen wie z. B. Kennlinien. Die Verwendung einer dreidimensionalen Umgebung ermöglicht es darüber hinaus, auch dreidimensionale Grafiken anzuzeigen. Dies ermöglicht es insbesondere, zu typischen zweidimensionalen Kennkurven, in denen aktuelle Daten der jeweiligen Komponente hinterlegt sind, auch historische Daten anzuzeigen, indem diese in der dritten Dimension hinter der aktuellen Kennkurve angeordnet sind.

Schließlich wird vorteilhafterweise in der dreidimensionalen Szene im Bereich einer Komponente ein Verknüpfungsobjekt angeordnet, wobei, wenn das Verknüpfungsobjekt im gerenderten Bild angewählt wird, eine zweidimensionale Ansicht, z.B. in Form einer technischen Zeichnung, der Komponente dargestellt wird. Für das Verständnis und die Überwachung einiger Komponenten kann es nämlich von Vorteil sein, zusätzlich zur dreidimensionalen Darstellung auf eine konventionelle, zweidimensionale technische Zeichnung zurückzugreifen. Um diese für den Benutzer einfach und fehlerfrei zuordenbar zur Verfügung zu halten, wird in der Szene und damit im gerenderten Bild ein Verknüpfungsobjekt angeordnet. Verknüpfungsobjekt meint ein Objekt in der Szene, welches eine Verknüpfung zu der technischen Zeichnung enthält und welches durch eine Benutzereingabe, d.h. durch Anklicken mit der Maus oder Berühren auf einem Touchscreen aktiviert werden kann. Die Aktivierung führt dann zur oben beschriebenen Darstellung der technischen Zeichnung.

Vorteilhafterweise ist das Verfahren interaktiv und das Rendering wird in Echtzeit durchgeführt. Hierzu werden vorteilhafterweise nach jeder Änderung der Positionsdaten oder der Blickrichtungsdaten durch eine Benutzereingabe die Verfahrensschritte des Renderns und des Darstellens erneut durchgeführt. Hierdurch ergibt sich für den Benutzer eine besonders komfortable Bedienung.

Ein Computerprogrammprodukt umfasst vorteilhafterweise Softwarecodeabschnitte, die, wenn sie auf einem Prozessor ausgeführt werden, den Prozessor zum Ausführen des beschriebenen Verfahrens veranlassen. Ein derartiges Computerprogramm kann beispielsweise als sogenannte "App" für Tabletcomputer ausgestaltet sein.

In einem Leitsystem für eine Automatisierungsanlage, umfassend mindestens einen Prozessor und eine Anzeigeeinheit, wird vorteilhafterweise auf dem mindestens einen Prozessor das beschriebene Verfahren ausgeführt. Der Prozessor ist dabei als Grafikprozessor ausgebildet, in den die Modelldaten für die Komponenten z.B. aus einer zentralen Prozessoreinheit geladen werden. Natürlich kann ein solches Leitsystem auch verteilt ausgebildet sein, es können mehrere Leitsysteme gekoppelt werden, oder es können mehrere Prozessoren miteinander kooperieren.

Vorteilhafterweise ist die Anzeigeeinheit auf einer mobilen, mit der Automatisierungsanlage und/oder weiteren Komponenten des Leitsystems durch eine drahtlose Kommunikationsverbindung verbundenen Einheit angeordnet. Eine derartige Einheit kann z.B. ein Tabletcomputer sein.

Die mit der Erfindung erzielten Vorteile bestehen insbesondere darin, dass durch eine flexible Abstandseinstellung zweier benachbarter Geschosse einer Automatisierungsanlage in einer 3D-Darstellung einerseits eine flexible und vollständige Informationswiedergabe ermöglicht wird, und andererseits für den Benutzer eine übersichtliche Darstellung auf einer minimalen Anzeigegröße erzeugt wird. Durch die beschriebenen Maßnahmen und vorteilhaften Weiterbildungen wird es möglich, alle Orte von Interesse in geeignetem Maßstab und unverdeckt anzuzeigen. Die dreidimensionale Darstellung der Fabrik und ihrer Anlagen erlaubt eine wesentlich intuitivere Navigation. Zudem kann durch die beschriebene Anreicherung der dreidimensionalen Szene mit ergänzenden Objekten wie 3D-Kennlinien und Verknüpfungsobjekten zusätzliche Information besonders intuitiv bereitgestellt werden. Neue Mitarbeiter können generelle Zusammenhänge in der Fabrik wesentlich leichter erkennen. Auch für Kunden ist die Nachvollziehbarkeit der Herstellung ihres Produktes innerhalb der Fabrik eine sehr willkommene Darstellung.

Ausführungsbeispiele der Erfindung werden anhand von Zeichnungen näher erläutert. Darin zeigen:
- FIG 1: eine schematische Darstellung einer Automatisierungsanlage mit verschiedenen Komponenten und einem Leitsystem mit mobiler Einheit,
- FIG 2: ein dreidimensionales gerendertes Bild eines Teils der Automatisierungsanlage,
- FIG 3: ein dreidimensionales gerendertes Bild einer mehrgeschossigen Automatisierungsanlage mit veränderbaren Abständen zwischen benachbarten Geschossen,
- FIG 4: eine Darstellung von Materialwegen in Bildern nach FIG 3,
- FIG 5: eine Darstellung einer automatischen Wahl von Position und Blickrichtung für das Rendering abhängig von der aktuellen Position eines Materials in der Automatisierungsanlage,
- FIG 6: einen Wechsel zwischen zweidimensionaler und dreidimensionaler Ansicht,
- FIG 7: einen Wechsel zu einer Explosionsdarstellung einer Komponente,
- FIG 8: eine grafisch hervorgehobene Darstellung fehlerhafter Komponenten und deren Abhängigkeiten,
- FIG 9: eine zweidimensionale Anzeigefläche über einer Komponente,
- FIG 10: mehrere, teilweise ausgeblendete Anzeigeflächen über einer Komponente in verschiedenen Blickrichtungen, und
- FIG 11: eine dreidimensionale Graphik über einer Komponente.

Gleiche Teile sind in allen Figuren mit denselben Bezugszeichen versehen.

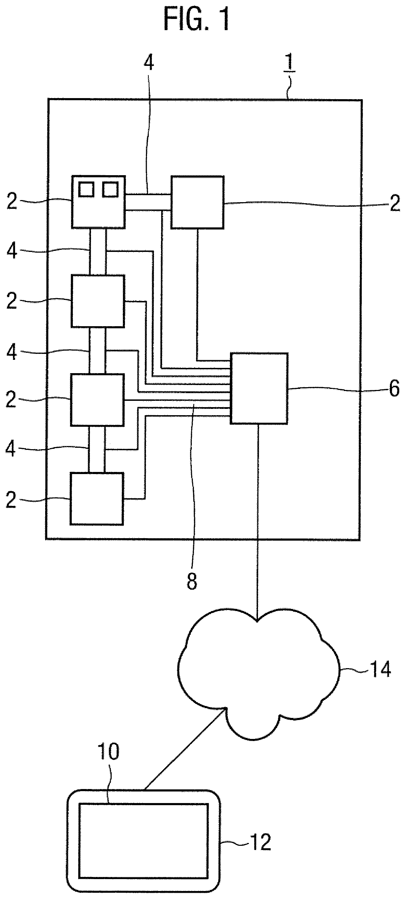

FIG 1 zeigt schematisch eine Automatisierungsanlage 1, d.h. eine Industrieanlage, in der Produktions- und Verarbeitungsschritte automatisiert erfolgen. Die Industrieanlage umfasst eine Vielzahl von Komponenten, darunter Verarbeitungsstationen 2, zu denen zu verarbeitende Produkte oder deren Vorstufen gebracht werden. Dies geschieht mittels Fördereinrichtungen 4 wie z.B. Förderbändern.

Die Steuerung und Überwachung der Automatisierungsanlage 1 erfolgt in einem Leitsystem 6, wo unter Mitwirkung eines Benutzers mittels entsprechender Daten aus der Automatisierungsanlage 1 die Prozessabläufe überwacht und ggf. beeinflusst werden. Das Leitsystem 6 verfügt hierzu über ein oder mehrere Geräte oder Datenverbindungen 8 zu Geräten an den verschiedenen Komponenten 2, 4 der Automatisierungsanlage 1 zum Messen, Regeln, Steuern, Anzeigen, Alarmieren, Registrieren, Schalten oder Rechnen.

Die Anzeige des Prozesses erfolgt hierbei über eine Anzeigeeinheit 10, im Ausführungsbeispiel ausgebildet als Bildschirm auf einer mobilen Einheit 12, hier einem Tabletcomputer, der als Teil des Leitsystems 6 mit diesem über eine drahtlose Datenverbindung 14 verbunden ist. Dies bietet dem Benutzer die Möglichkeit der Anzeige und Steuerung der Automatisierungsanlage 1 während er sich frei in der Automatisierungsanlage 1 bewegen kann.

Auf der Anzeigeeinheit 10 wird die Automatisierungsanlage 1 in echter dreidimensionaler Darstellung inklusive aller Komponenten 2, 4 sowie aller derzeit bearbeiteten Produkte vor und nach dem Zusammenbau dargestellt. Die Erzeugung des jeweiligen Bildes auf der Anzeigeeinheit 10 erfolgt durch übliche Techniken des Renderings in einem nicht näher dargestellten (Grafik-)Prozessor in der mobilen Einheit 12. Das Rendering erfolgt in Echtzeit, so dass einerseits die Darstellung interaktiv ist, d.h. der Benutzer kann durch entsprechende Eingaben Blickwinkel und Position verändern, wobei sich die 3D-Darstellung unmittelbar entsprechend verändert, und andererseits ist dadurch auch ein dynamisches Abbild der Automatisierungsanlage 1 möglich, in der tatsächlich bewegte Komponenten wie z.B. zu verarbeitende Produkte auch in Echtzeit an ihrem jeweils aktuellen Ort dargestellt und mitbewegt werden. Hierfür und für alle anderen im Folgenden dargestellten Funktionen ist im Leitsystem 6 und der mobilen Einheit 12 eine entsprechende Software installiert.

Die Darstellung der Automatisierungsanlage 1 ist dabei möglichst maßstabsgetreu, d.h. alle Komponenten 2, 4 werden zumindest schematisch in ihrer tatsächlichen Größe und Form sowie in maßstabsgetreuer Lage und Abstand zueinander dargestellt. Hiervon können - zum Zwecke einer verbesserten Darstellung - Abweichungen vorgenommen werden, solange für den Benutzer noch identifizierbar ist, welcher realen Komponente eine Darstellung entspricht. Grundlage hierfür bildet eine datenseitige dreidimensionale Beschreibung der Komponenten 2, 4 der Automatisierungsanlage 1, die sogenannte Szene. Diese wurde mittels geometrischer Modellierung erzeugt. Die entsprechenden Modelldaten werden von einer zentralen Prozessoreinheit ausgewählt und in einen Grafikprozessor der mobilen Einheit 12 geladen. Die Modeldaten können dabei auch auf einem zentralen Server des Leitsystems 6 hinterlegt sein und bedarfsweise an die mobile Einheit 12 übertragen werden. Zusammen mit jeweils aktuellen Positions- und Blickrichtungsdaten wird dann - je nach Leistungsfähigkeit des Grafikprozessors - zyklisch, idealerweise mehrfach pro Sekunde mit bekannten Methoden der Computergrafik der im Blickfeld liegende Teil der Automatisierungsanlage 1 mit ihren Komponenten 2, 4 durch den Grafikprozessor gerendert und auf der Anzeigeeinheit 10 dargestellt.

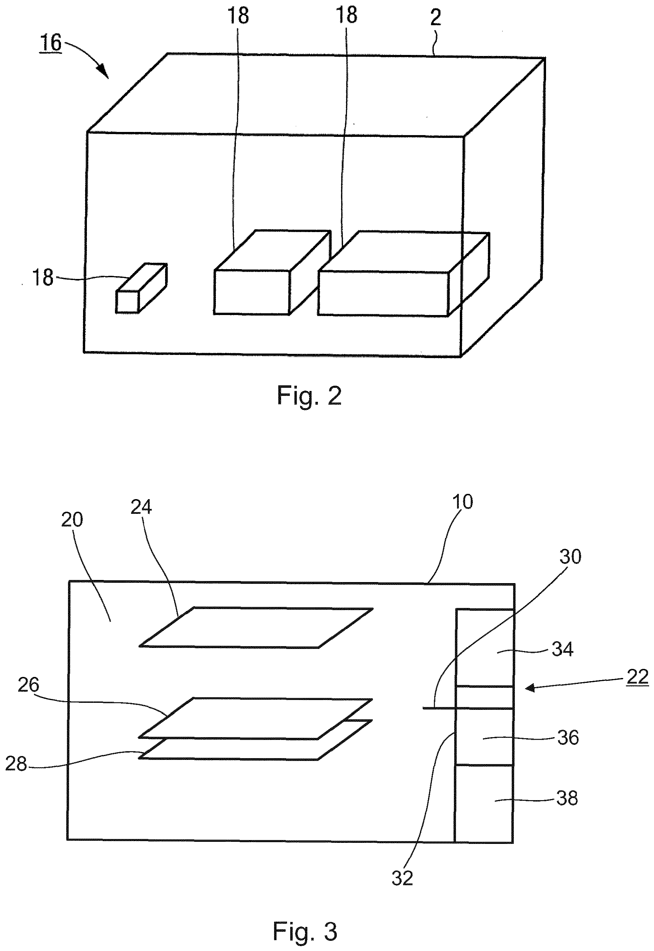

Beispielhaft ist ein derartiges gerendertes Bild 16, wie es auf der Anzeigeeinheit 10 dargestellt wird, in FIG 2 gezeigt. Der Einfachheit der Darstellung halber sind hier und in der Folge sämtliche Komponenten 2, 4 der Automatisierungsanlage 1 als Quader gezeigt, sie werden jedoch in der Realität komplexere Formen aufweisen. Das Bild 16 zeigt eine gerenderte Darstellung einer Verarbeitungseinheit 2, die drei Subkomponenten 18 umfasst. Dies ist in jeder Automatisierungsanlage 1 der Fall: Jede Verarbeitungsstation 2 wird aus verschiedenen Teilen (Roboterarme, Bearbeitungsmaschinen etc.) bestehen. Diese sind in der 3D-Darstellung im Bild 16 ebenfalls weitgehend maßstabsgetreu wiedergegeben und werden vom Prozessor gerendert. Die Darstellung der Verarbeitungsstation 2 ist dabei in der FIG 2 halbtransparent, so dass die innenliegenden Subkomponenten 18 sichtbar sind.

Je nach Größe sind Automatisierungsanlagen 1 auch mehrgeschossig ausgestaltet. Die Komponenten 2, 4 mit ihren jeweiligen Subkomponenten 18 sind somit auf mehrere Geschosse verteilt. Eine vollständige Darstellung der Automatisierungsanlage 1 erfordert somit eine Darstellung der Geschosse. Hierbei ergibt sich das Problem, dass je nach gewünschtem Bildausschnitt oder Fokus Teile der Automatisierungsanlage 1 von darüber liegenden Geschossen und deren Komponenten 2, 4 verdeckt werden.

Zur Lösung dieses Problems wird daher eine bedarfsweise Veränderung des vertikalen Abstands zwischen den Geschossen in der oben beschriebenen Szene vorgesehen, die zum Rendern durch den Prozessor benutzt wird. Dies ist in FIG 3 dargestellt, die die Anzeigeeinheit 10 mit einem Bild 20 sowie einem Eingabeelement 22 zeigt. Im Bild 20 sind aus Gründen der Übersicht vereinfacht nur die drei Geschosse 24, 26, 28 der Automatisierungsanlage 1 ohne Komponenten 2, 4 gezeigt. Tatsächlich sind hier auch sämtliche Komponenten 2, 4 auf den Geschossen 24, 26, 28 dargestellt. Mittels des Eingabeelements 22 kann der Abstand der Geschosse 24, 26, 28 zueinander verändert werden, wie im Folgenden dargestellt wird.

Das Eingabeelement 22 ist als graphisches Element auf der rechten Seite der Anzeigeeinheit 10 angeordnet und umfasst ein mittiges, stationäres Zeigerelement 30 und eine darunter vertikal bewegbar angeordnete Abschnittsskala 32. Die Anzeigeeinheit 1 kann dabei als Touchscreen ausgebildet sein, so dass die Abschnittsskala 32 mittels Wischgeste bewegt werden kann. Die Abschnittsskala 32 umfasst drei rechteckige, übereinander angeordnete Abschnitte 34, 36, 38. Jeder der Abschnitte 34, 36, 38 ist dabei einem Geschoss 24, 26, 28 zugeordnet, und zwar in entsprechender Reihenfolge, d.h. der oberste Abschnitt 34 dem obersten Geschoss 24 usw. Durch Bewegen eines der Abschnitte 34, 36, 38 unter das Zeigerelement 30 wird das jeweils zugeordnete Geschoss 24, 26, 28 ausgewählt und der Abstand des ausgewählten Geschosses 24, 26, 28 zum darüber liegenden Geschoss 24, 26 gegenüber dem maßstabsgetreuen Abstand in der Automatisierungsanlage 1 vergrößert. Dies gilt natürlich auch für alle auf den jeweiligen Geschossen 24, 26, 28 angeordneten Komponenten 2, 4. Das Maß dieser Veränderung kann in Ausführungsformen dadurch bestimmt werden, in welchem Bereich des jeweiligen Abschnitts 34, 36, 38 sich das Zeigerelement 30 befindet. So kann der Abstand z.B. maximal werden, wenn sich das Zeigerelement 30 mittig im jeweiligen Abschnitt 34, 36, 38 befindet. Dadurch kann der Abstand durch den Benutzer beliebig gezielt eingestellt werden.

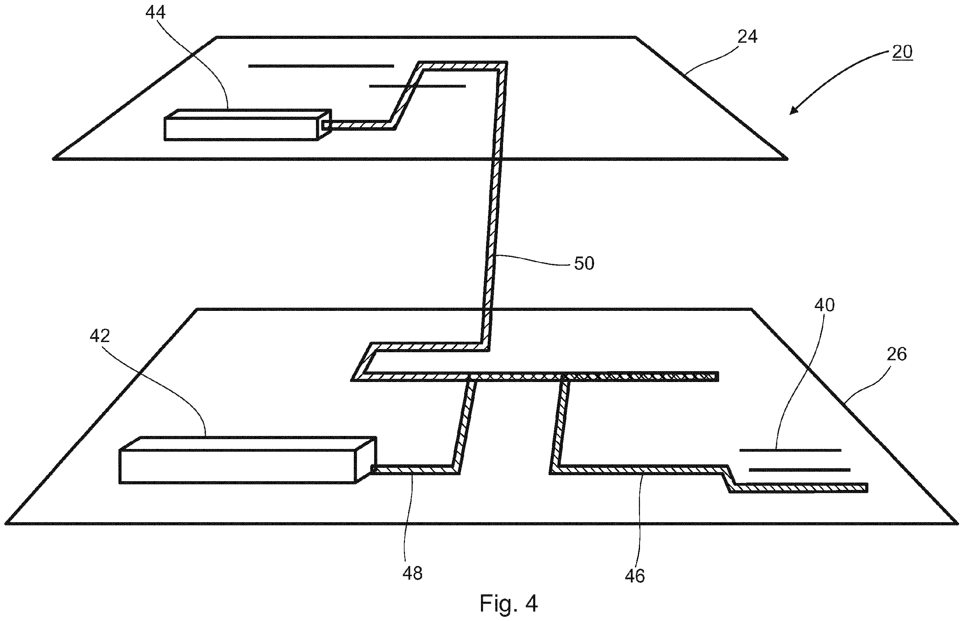

FIG 4 zeigt das Bild 20 ausschnittsweise in größerem Detail. Hierbei sind in der FIG 4 nur die beiden oberen, mit größerem als maßstabsgetreuem Abstand gerenderten Geschosse 24, 26 mit einigen Komponenten 40, 42, 44 gezeigt. In dem Bild 20 sind zusätzlich Materialwege 46, 48, 50 als Linien dargestellt, die den Weg anzeigen, den bestimmte Materialien der in der Automatisierungsanlage 1 hergestellten oder bearbeiteten Objekte nehmen. Wird ein Objekt aus verschiedenen Teilen hergestellt, wie im Beispiel der FIG 4, so werden die entsprechenden Linien zusammengeführt. So münden die Materialwege 46, 48 von den Komponenten 40 bzw. 42 in den Materialweg 50. Die Materialwege 46, 48, 50 stellen somit eine Projektion zukünftiger Materialbewegungen innerhalb der Automatisierungsanlage 1 dar. Sie zeigen an, wo und wann bestimmte Objekte zur Erstellung eines neuen Objekts konsumiert werden.

Die Materialwege 46, 48, 50 können in der Darstellung verändert werden. Insbesondere können sie grafisch separat hervorgehoben werden, z.B. durch eine Farbänderung oder Verdickung der Linien. Der Materialweg 50 erstreckt sich darüber hinaus vertikal zwischen den Geschossen 24, 26. Die entsprechende Linie wird bei der Veränderung des Abstands zwischen den Geschossen 24, 26 in der dreidimensionalen Szene und dem gerenderten Bild 20 entsprechend mit verändert, so dass die Linie stets durchgehend zwischen den beiden Geschossen 24, 26 verläuft.

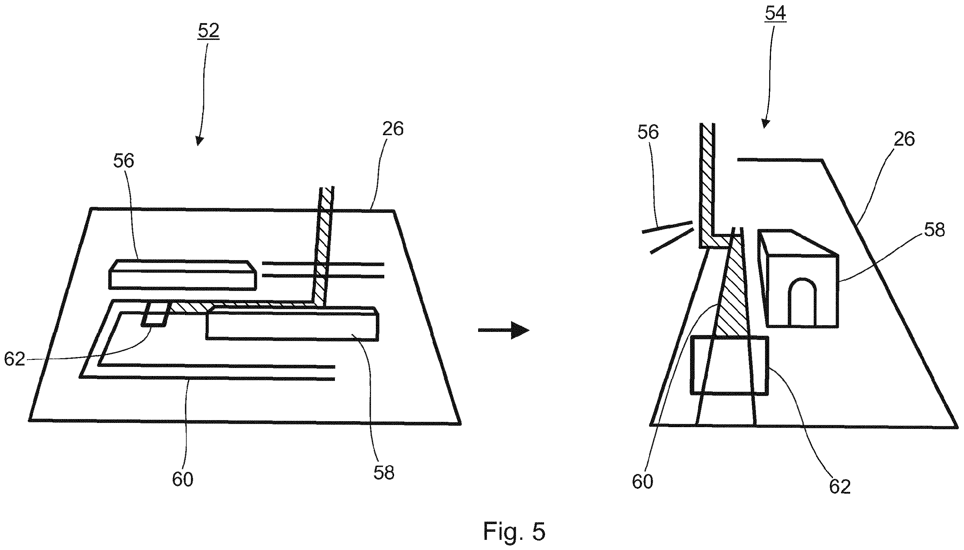

FIG 5 zeigt zwei gerenderte Bilder 52, 54, die aus derselben Szene gerendert sind und sich durch Blickwinkel und Position voneinander unterscheiden. Bild 52 kann also durch Veränderung von Blickwinkel und Position in Bild 54 überführt werden, was durch einen Pfeil zwischen den Bildern 52, 54 angedeutet ist. Dementsprechend werden die einzelnen Objekte in den Bildern 52, 54 im Folgenden nur einmal beschrieben. Die Bilder 52, 54 zeigen das Geschoss 26 an anderer Stelle wie in FIG 4. Dargestellt sind Komponenten 56, 58 sowie ein Materialweg 60. Im Gegensatz zum Ausführungsbeispiel der FIG 4 wird in der FIG 5 nicht nur der Materialweg 60, sondern auch mittels aktueller Daten aus dem Leitsystem 6 der Automatisierungsanlage 1 auch die aktuelle Position eines Materials 62 auf dem Materialweg 60 in Echtzeit dargestellt. Hierbei wird der zukünftige, d.h. aktuell noch nicht abgeschrittene Weg des Materials 62 auf dem Materialweg 60 grafisch separat hervorgehoben, z.B. durch eine Farbänderung oder Verdickung der Linien.

In einem weiteren Ausführungsbeispiel erfolgt die Positions- und Blickrichtungsänderung zwischen Bild 52 und Bild 54 nicht durch eine oben beschriebene Benutzereingabe, sondern automatisch auf Basis der Position des Materials 62. Dabei wird ein fester Abstand zum Material 62 eingenommen und die Blickrichtung in Bewegungsrichtung des Materials 62 gewählt. Da sich das Material 62 in Echtzeit im Bild 52, 54 bewegt, der Abstand hierzu jedoch gleich bleibt, ändern sich Position und Blickrichtung entsprechend der Bewegung des Materials 62. Die Darstellung wird somit quasi zu einem "Flug" durch die Automatisierungsanlage 1.

Im Folgenden werden weitere Aspekte und Merkmale von Ausführungsbeispielen der Erfindung erläutert. Diese können beliebig miteinander kombiniert und sowohl mit den bisher beschriebenen Merkmalen oder ohne diese in Ausführungsbeispielen realisiert sein.

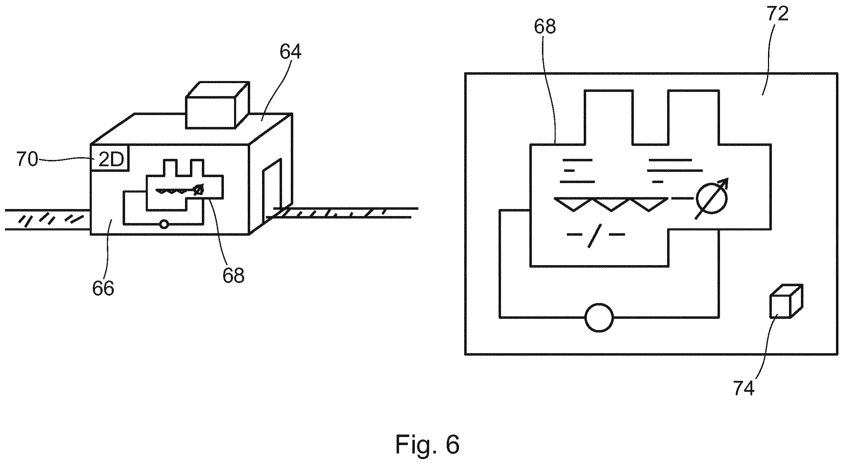

FIG 6 zeigt in der linken Bildhälfte einen Ausschnitt eines gerenderten Bildes. Dort ist eine Komponente 64 dargestellt. Auf einer Oberfläche 66 der Komponente 64 ist eine herkömmliche, zweidimensionale Darstellung 68 der Komponente 64 angeordnet. Durch entsprechendes Hineinzoomen und Einstellung einer Blickrichtung senkrecht über der Oberfläche 68 kann der Benutzer somit eine Ansicht in der Art einer aus dem Stand der Technik bekannten Darstellung der Komponente 64 erhalten, ohne hierfür die dreidimensionale Darstellung verlassen zu müssen. Zusätzlich ist auf der Oberfläche 66 ein Verknüpfungsobjekt 70 in der Art einer Schaltfläche angeordnet. Diese kann durch den Benutzer angewählt werden, z.B. durch Berührung auf einem Touchscreen oder Anklicken mittels eines Mauszeigers. Durch die Auswahl wird auf der Anzeigeeinheit 10 die in der FIG 6 auf der rechten Seite gezeigte zweidimensionale Ansicht 72 aktiviert. Diese Ansicht 72 zeigt ebenfalls die bereits erwähnte zweidimensionale Darstellung 68 der Komponente 64, jedoch als separate Darstellung und nicht in der dreidimensionalen Umgebung eingebettet. Auch in der zweidimensionalen Ansicht 72 ist ein Verknüpfungsobjekt 74 in Form einer Schaltfläche hinterlegt. Durch Auswahl dieses Verknüpfungsobjekts 74 kann der Benutzer zur dreidimensionalen Ansicht zurückkehren.

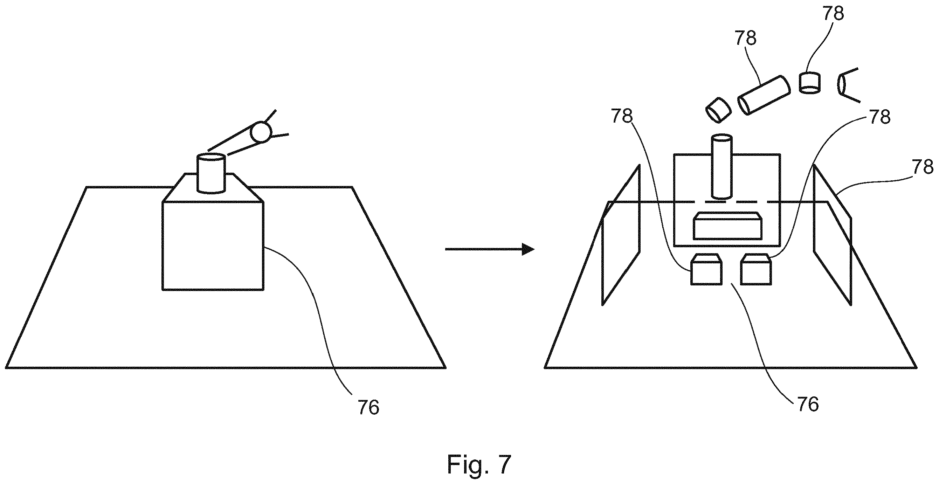

FIG 7 zeigt als weiteres Merkmal die Möglichkeit einer Explosionsdarstellung innerhalb der dreidimensionalen Umgebung. FIG 7 zeigt in der linken Bildhälfte einen Ausschnitt eines gerenderten Bildes. Hier ist eine Komponente 76 in oben beschriebener Weise dargestellt. Durch eine Benutzerinteraktion, z.B. über eine nicht näher dargestellte Schaltfläche wird die in der linken Hälfte der FIG 7 gezeigte Abbildung in die rechte überführt, die eine Explosionsdarstellung der Komponente 76 zeigt. Explosionsdarstellung bedeutet, dass die Teile 78 der Komponente 76 (von denen in FIG 7 aus Gründen der Übersichtlichkeit nicht alle mit dem Bezugszeichen 78 versehen sind) mit zueinander vergrößertem Abstand dargestellt werden. Hierbei findet ein fließender Übergang zwischen der linken und der rechten Darstellung statt, d.h. die Teile 78 bewegen sich aus ihrer Ursprungsposition stetig in die Position mit vergrößertem Abstand zueinander. Zuvor verdeckte Teile werden dabei sichtbar. In Ausführungsbeispielen können dabei Teile 78, die für die Funktion der Komponente 76 nicht essentiell sind, wie z.B. Abdeckungen beim Rendern transparent dargestellt oder vollständig ausgeblendet werden.

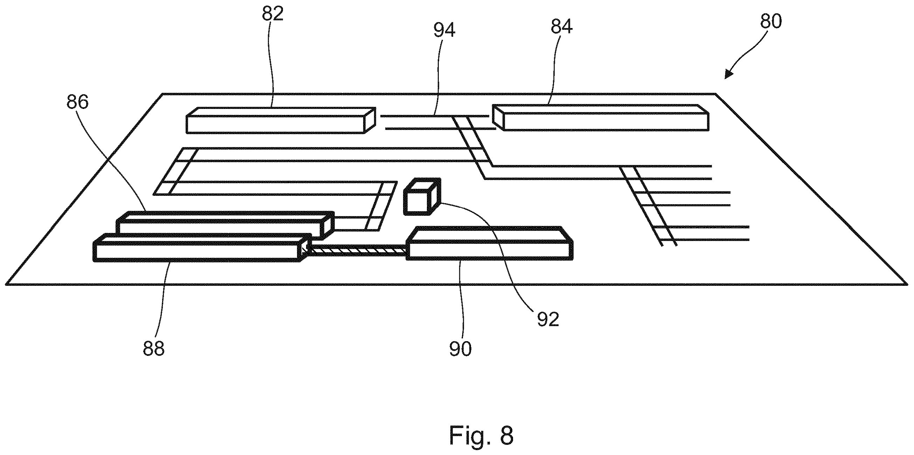

FIG 8 zeigt ein Bild 80 mit in bereits oben beschriebener Weise dargestellten Komponenten 82 - 92 sowie dazwischen angeordnetem Materialweg 94. In FIG 8 ist die Situation dargestellt, in der die Komponente 92 in der Automatisierungsanlage 1 einen Fehler aufweist. Im Bild 80 wird diese Komponente 92 grafisch hervorgehoben, im Beispiel durch eine unterschiedliche Farbgebung und/oder Aufblinken. Gleichzeitig werden in der in FIG 8 dargestellten Ausführungsform sämtliche Komponenten 86, 88, 90, die physisch oder logisch von der fehlerhaften Komponente 92 abhängig sind, ebenfalls grafisch hervorgehoben dargestellt, im Beispiel ebenfalls durch unterschiedliche Farbgebung. Dadurch ist für den Benutzer unmittelbar erkennbar, welche Komponenten 86, 88, 90 von Ausfall einer Komponente 92 betroffen sind.

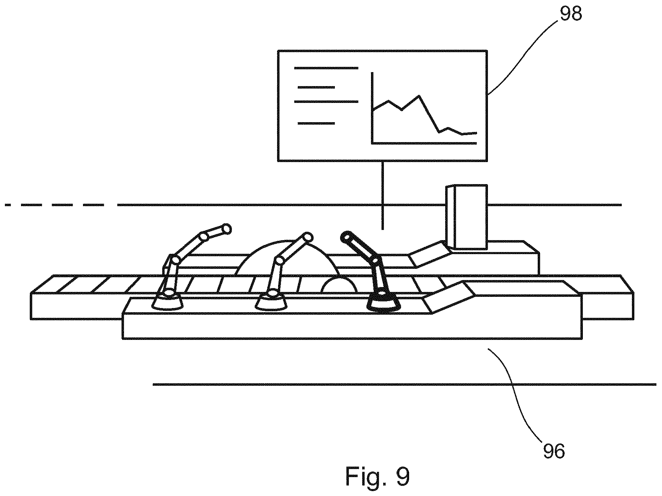

FIG 9 zeigt eine Komponente 96 in bereits oben beschriebener dreidimensionaler Darstellung. Im Ausführungsbeispiel der FIG 9 wird oberhalb von der dargestellten Komponente 96 eine zweidimensionale Anzeigefläche 98 in der dreidimensonalen Umgebung gerendert. Diese Anzeigefläche 98 kann z.B. Diagnoseinformationen zur Komponente 96 enthalten und anzeigen. Dabei sind die auf der Anzeigefläche 98 dargestellten Informationen abhängig von einer Rolle, die der Benutzer innehat. Bei der Verwendung der Anzeigeeinheit 10 werden dem Benutzer Rollen vorgegeben, oder einer Benutzer-Identifikation sind bestimmte Rollen vorgegeben. Je nach vergebener Rolle werden die auf der Anzeigefläche 98 angezeigten Informationen dabei angepasst.

In der Ausführungsform nach FIG 9 ist es auch möglich, die auf der Anzeigefläche 98 dargestellte Information nach einer bestimmten Ablaufzeit, z.B. nach 10 Sekunden zu ändern. Durch die zusätzliche zeitliche Komponente kann mehr Information dargestellt werden, als eigentlich auf die Anzeigefläche 98 passt. Die Änderung erfolgt beispielsweise durch Scrollen, Aus- und Einblenden oder andere visuelle Effekte.

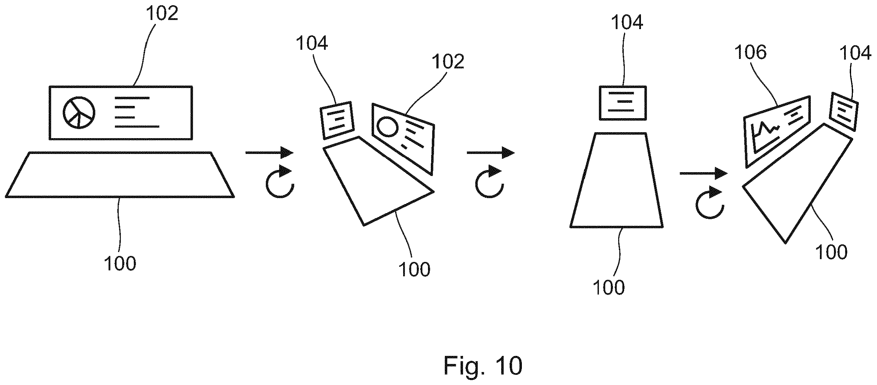

FIG 10 zeigt eine weitere Verbesserung der zu FIG 9 beschriebenen Anzeigefläche 98. Hier ist die Oberseite einer Komponente 100 dargestellt. Diese weist eine rechteckige Fläche auf. In der dreidimensionalen Szene sind drei zweidimensionale Anzeigeflächen 102, 104, 106 über je einer der Kanten der rechteckigen Fläche vorgesehen. Diese werden jedoch nicht alle dargestellt bzw. gerendert, sondern es werden je nach Blickwinkel in der dreidimensionalen Darstellung nur diejenigen Anzeigeflächen 102, 104, 106 dargestellt, die aus Sicht des Benutzers hinter der Komponente 100 liegen. Dies ist in FIG 10 dargestellt, die die Komponente mit den Anzeigeflächen 102, 104, 106 aus vier verschiedenen Blickrichtungen zeigt. In der ersten Darstellung (von links nach rechts), in der der Benutzer auf eine lange Kante der Komponente 100 blickt, ist nur die Anzeigefläche 102 dargestellt, die über der gegenüberliegenden Kante angeordnet ist. Die zweite Darstellung ist um 45 Grad gedreht, so dass der Benutzer auf eine Ecke blickt. Dadurch befinden sich nun zwei Kanten der Komponente 100 im Hintergrund, so dass die darüber befindlichen Anzeigeflächen 102, 104 dargestellt werden. In ähnlicher Weise verändern sich die dritte und die vierte Darstellung bei entsprechender Drehung.

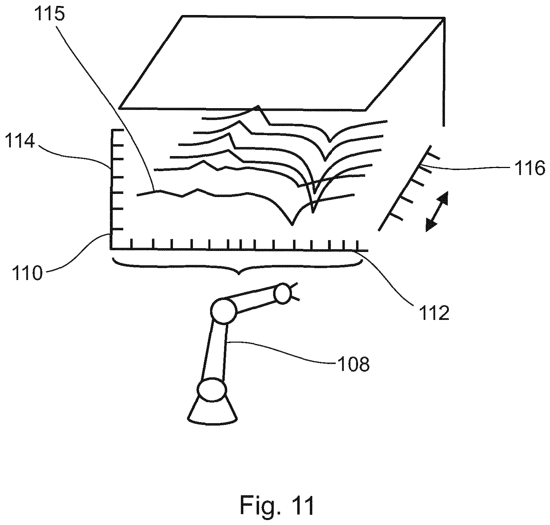

FIG 11 zeigt schließlich eine weitere Möglichkeit von zusätzlichen Informationen, die in die dreidimensionale Darstellung in einzelnen Ausführungsformen eingebettet werden können. FIG 11 zeigt in bereits beschriebener Weise eine dreidimensionale Darstellung einer Komponente 108. Oberhalb der Komponente ist eine dreidimensionale Graphik 110 in Quaderform angeordnet. Diese weist ein dreidimensionales Koordinatenraster auf. Die x-Achse 112 und die y-Achse 114 bilden ein Koordinatenraster, in dem in bekannter Weise eine aktuelle Kennkurve 115 dargestellt ist, die der Komponente 108 zugeordnet ist. In der z-Achse hingegen sind historische Darstellungen der Kennkurve 115 in festen Zeitabständen abgebildet, d.h. hinter der Kennkurve 115 befinden sich historische Darstellungen der Kennkurve 115 in festen Zeitabständen hintereinander aufgereiht. Dies ermöglicht eine exzellente Übersicht über Entwicklungen mehrerer Datenpunkte. Ist eine große Menge historischer Information vorhanden, kann die z-Achse 116 auch mit einer Bildlaufleiste versehen werden, so dass durch die historischen Abbildungen geblättert werden kann.

In einzelnen Ausführungsformen kann der Benutzer durch Auswahl bestimmter Datenreihen in eine detailliertere zweidimensionale Ansicht wechseln. Auch eine Vergleichsansicht, in der zwei oder mehr historische Kurven miteinander oder mit einer Referenzkurve verglichen werden, ist denkbar. Die Referenzkurve kann hierbei aus gemessenen oder anhand eines Modells ermittelten Simulationswerten erstellt werden.

In der oben beschriebenen dreidimensionalen Graphik 110 kann bezüglich der historischen Kennkurven zwischen einem Realwertmodus und einem Abweichungsmodus unterschieden werden. Im Realwertmodus werden die Absolutwerte der jeweiligen Kurven gezeigt. Im Abweichungsmodus werden lediglich Abweichungen von der oben beschriebenen Referenzkurve für jeder Kennkurve angezeigt. Dadurch werden Abweichungen durch entsprechende Spitzen einfach sichtbar und können auch graphisch hervorgehoben werden.

Wie bereits oben beschrieben sind die verschiedenen beschriebenen Merkmale in unterschiedlichen Ausführungsbeispielen beliebig kombinierbar.

### Bezugszeichenliste

- 1: Automatisierungsanlage
- 2: Verarbeitungsstation
- 4: Fördereinrichtung
- 6: Leitsystem
- 8: Datenverbindung
- 10: Anzeigeeinheit
- 12: mobile Einheit
- 14: drahtlose Datenverbindung
- 16: Bild
- 18: Subkomponente
- 20: Bild
- 22: Eingabeelement
- 24, 26, 28: Geschoss
- 30: Zeigerelement
- 32: Abschnittsskala
- 34, 36, 38: Abschnitt
- 40, 42, 44: Komponente
- 46, 48, 50: Materialweg
- 52, 54: Bild
- 56, 58: Komponente
- 60: Materialweg
- 62: Material
- 64: Komponente
- 66: Oberfläche
- 68: zweidimensionale Darstellung
- 70: Verknüpfungsobjekt
- 72: zweidimensionale Ansicht
- 74: Verknüpfungsobjekt
- 76: Komponente
- 78: Teile
- 80: Bild
- 82, 84, 86, 88, 90, 92: Komponente
- 94: Materialweg
- 96: Komponente
- 98: zweidimensionale Anzeigefläche
- 100: Komponente
- 102, 104, 106: zweidimensionale Anzeigefläche
- 108: Komponente
- 110: dreidimensionale Graphik
- 112: x-Achse
- 114: y-Achse
- 115: Kennkurve
- 116: z-Achse

## Patentansprüche

1. Verfahren zur Überwachung einer Automatisierungsanlage (1) mit einer Vielzahl von Komponenten (2, 4, 18, 20, 40, 42, 44, 56, 58, 64, 76, 82, 84, 86, 88, 90, 92, 96, 100, 108), umfassend:
Rendern, durch einen Prozessor, eines Bildes (16, 22, 40, 52, 54, 80) aus einer zumindest einen Teil der Automatisierungsanlage (1) darstellenden,
dreidimensionalen Szene auf Basis von Positionsdaten und Blickrichtungsdaten,
Darstellen des Bildes (16, 22, 40, 52, 54, 80) auf einer Anzeigeeinheit (10),
**dadurch gekennzeichnet, dass**
die Komponenten (2, 4, 18, 20, 40, 42, 44, 56, 58, 64, 76, 82, 84, 86, 88, 90, 92, 96, 100, 108) über eine Mehrzahl von Geschossen (24, 26, 28) der Automatisierungsanlage (1) verteilt sind und die Komponenten (2, 4, 18, 20, 40, 42, 44, 56, 58, 64, 76, 82, 84, 86, 88, 90, 92, 96, 100, 108) in der dreidimensionalen Szene jeweils auf einem Geschoss (24, 26, 28) angeordnet sind,
ein den Geschossen (24, 26, 28) zugeordnetes Eingabeelement (22) vorgesehen ist,
wobei abhängig von einer Eingabe am Eingabeelement (22) ein vertikaler Abstand zwischen zwei benachbarten Geschossen (24, 26, 28) in der dreidimensionalen Szene verändert wird, und wobei
Materialwege (60, 94) zwischen Komponenten (2, 4, 18, 20, 40, 42, 44, 56, 58, 64, 76, 82, 84, 86, 88, 90, 92, 96, 100, 108) der Automatisierungsanlage (1) als Linien in der Szene dargestellt werden, wobei zumindest eine Linie einen Materialweg (60, 94) zwischen den benachbarten Geschossen (24, 26, 28) darstellt, und
wobei, wenn der vertikale Abstand zwischen den zwei benachbarten Geschossen (24, 26, 28) in der dreidimensionalen Szene verändert wird, auch die Länge der Linie dementsprechend verändert wird.

2. Verfahren nach Anspruch 1, bei dem mittels des Eingabeelements (22) eines der Geschosse (24, 26, 28) auswählbar ist und der vertikale Abstand des ausgewählten Geschosses (24, 26, 28) zum darüber liegenden Geschoss (24, 26, 28) verändert wird.

3. Verfahren nach Anspruch 2, bei dem das Eingabeelement (22) ein stationäres Zeigerelement (30) und eine darunter bewegbare Abschnittsskala (32) umfasst, wobei jedem der Abschnitte (34, 36, 38) ein Geschoss (24, 26, 28) zugeordnet ist, und ein Geschoss (24, 26, 28) ausgewählt wird, indem der diesem Geschoss (24, 26, 28) zugeordnete Abschnitt (34, 36, 38) unter das Zeigerelement (30) bewegt wird.

4. Verfahren nach Anspruch 2 oder 3, bei dem der vertikale Abstand gegenüber dem maßstabsgerechten Abstand vergrößert wird.

5. Verfahren nach einem der vorhergehenden Ansprüche, bei dem mittels des Eingabeelements (22) innerhalb eines vorgegebenen Bereiches ein beliebiger vertikaler Abstand eingestellt wird.

6. Verfahren nach einem der vorhergehenden Ansprüche, bei dem in der Szene die aktuelle Position eines Materials (62) auf den Materialwegen (60, 94) dargestellt wird.

7. Verfahren nach einem der vorhergehenden Ansprüche, bei dem die Positionsdaten automatisch in einem festen Abstand zur aktuellen Position des Materials (62) bestimmt werden.

8. Verfahren nach einem der vorhergehenden Ansprüche, bei dem auf eine Benutzereingabe der Abstand von Teilen (78) einer Komponente (2, 4, 18, 20, 40, 42, 44, 56, 58, 64, 76, 82, 84, 86, 88, 90, 92, 96, 100, 108) zueinander in der dreidimensionalen Szene vergrößert wird.

9. Verfahren nach einem der vorhergehenden Ansprüche, bei dem in der dreidimensionalen Szene im Bereich einer Komponente (2, 4, 18, 20, 40, 42, 44, 56, 58, 64, 76, 82, 84, 86, 88, 90, 92, 96, 100, 108) eine dreidimensionale Graphik (110) angeordnet wird, wobei die Graphik (110) eine aktuelle Darstellung einer zweidimensionalen Kennkurve (115) der Komponente (2, 4, 18, 20, 40, 42, 44, 56, 58, 64, 76, 82, 84, 86, 88, 90, 92, 96, 100, 108) zusammen mit historischen Darstellungen der Kennkurve (115) enthält, die in der dritten Dimension hintereinander angeordnet sind.

10. Verfahren nach einem der vorhergehenden Ansprüche, bei dem in der dreidimensionalen Szene im Bereich einer Komponente (2, 4, 18, 20, 40, 42, 44, 56, 58, 64, 76, 82, 84, 86, 88, 90, 92, 96, 100, 108) ein Verknüpfungsobjekt (70) angeordnet wird, wobei, wenn das Verknüpfungsobjekt (70) im gerenderten Bild angewählt wird, eine zweidimensionale Ansicht (72) der Komponente (2, 4, 18, 20, 40, 42, 44, 56, 58, 64, 76, 82, 84, 86, 88, 90, 92, 96, 100, 108) dargestellt wird.

11. Verfahren nach einem der vorhergehenden Ansprüche, bei dem nach jeder Änderung der Positionsdaten oder der Blickrichtungsdaten durch eine Benutzereingabe die Verfahrensschritte des Renderns und des Darstellens erneut durchgeführt werden.

12. Computerprogrammprodukt, welches Softwarecodeabschnitte umfasst, die, wenn sie auf einem Prozessor ausgeführt werden, den Prozessor zum Ausführen des Verfahrens nach einem der vorhergehenden Ansprüche veranlassen.

13. Leitsystem (6) für eine Automatisierungsanlage (1), umfassend einen Prozessor und eine Anzeigeeinheit (10), wobei auf dem Prozessor das Verfahren nach einem der Ansprüche 1 bis 11 ausgeführt wird.

14. Leitsystem (6) nach Anspruch 13, dessen Anzeigeeinheit (10) auf einer mobilen, mit der Automatisierungsanlage (1) und/oder weiteren Komponenten des Leitsystems (6) durch eine drahtlose Kommunikationsverbindung (14) verbundenen Einheit (12) angeordnet ist.

## Claims

1. A method for monitoring an automation system (1) comprising a plurality of components (2, 4, 18, 20, 40, 42, 44, 56, 58, 64, 76, 82, 84, 86, 88, 90, 92, 96, 100, 108), comprising:
rendering, by a processor, an image (16, 22, 40, 52, 54, 80) from a three-dimensional scene representing at least part of the automation system (1) on the basis of position data and viewing direction data,
displaying the image (16, 22, 40, 52, 54, 80) on a display unit (10),
**characterized in that**
the components (2, 4, 18, 20, 40, 42, 44, 56, 58, 64, 76, 82, 84, 86, 88, 90, 92, 96, 100, 108) are distributed over a plurality of floors (24, 26, 28) of the automation system (1) and the components (2, 4, 18, 20, 40, 42, 44, 56, 58, 64, 76, 82, 84, 86, 88, 90, 92, 96, 100, 108) are arranged in the three-dimensional scene on one of said floors (24, 26, 28), respectively, an input element (22) associated with the floors (24, 26, 28) is provided,
wherein a vertical distance between two adjacent floors (24, 26, 28) in the three-dimensional scene is changed depending on an input at the input element (22), and
wherein
material paths (60, 94) between components (2, 4, 18, 20, 40, 42, 44, 56, 58, 64, 76, 82, 84, 86, 88, 90, 92, 96, 100, 108) of the automation system (1) are represented as lines in the scene, wherein at least one line represents a material path (60, 94) between said adjacent floors (24, 26, 28), and wherein when the vertical distance between said two adjacent floors (24, 26, 28) in the three-dimensional scene is changed, the length of the line is also changed accordingly.

2. The method according to claim 1, wherein one of the floors (24, 26, 28) can be selected by means of the input element (22) and the vertical distance of the selected floor (24, 26, 28) to the floor (24, 26, 28) lying above it is changed.

3. The method according to claim 2, wherein the input element (22) comprises a stationary pointer element (30) and a section scale (32) movable therebelow, wherein a floor (24, 26, 28) is associated with each of the sections (34, 36, 38), and a floor (24, 26, 28) is selected by moving the section (34, 36, 38) associated with that floor (24, 26, 28) below the pointer element (30) .

4. The method according to claim 2 or 3, wherein the vertical distance is increased in relation to the true to scale distance.

5. The method according to any of the preceding claims, wherein an arbitrary vertical distance is set within a predetermined range by means of the input element (22).

6. The method according to any of the preceding claims, wherein the current position of a material (62) on the material paths (60, 94) is represented in the scene.

7. The method according to any of the preceding claims, wherein the position data is automatically determined at a fixed distance from the current position of the material (62).

8. The method according to any of the preceding claims, wherein, upon user input, the distance between parts (78) of a component (2, 4, 18, 20, 40, 42, 44, 56, 58, 64, 76, 82, 84, 86, 88, 90, 92, 96, 100, 108) in the three-dimensional scene is increased.

9. The method according to any of the preceding claims, wherein a three-dimensional graphic (110) is arranged in the three-dimensional scene in the region of a component (2, 4, 18, 20, 40, 42, 44, 56, 58, 64, 76, 82, 84, 86, 88, 90, 92, 96, 100, 108), wherein the graphic (110) includes a current representation of a two-dimensional characteristic curve (115) of the component (2, 4, 18, 20, 40, 42, 44, 56, 58, 64, 76, 82, 84, 86, 88, 90, 92, 96, 100, 108) together with historical representations of the characteristic curve (115) arranged one behind the other in the third dimension.

10. The method according to any of the preceding claims, wherein a link object (70) is arranged in the three-dimensional scene in the region of a component (2, 4, 18, 20, 40, 42, 44, 56, 58, 64, 76, 82, 84, 86, 88, 90, 92, 96, 100, 108), wherein when the link object (70) is selected in the rendered image, a two-dimensional view (72) of the component (2, 4, 18, 20, 40, 42, 44, 56, 58, 64, 76, 82, 84, 86, 88, 90, 92, 96, 100, 108) is displayed.

11. The method according to any of the preceding claims, wherein the method steps of rendering and displaying are carried out again after each change of the position data or the viewing direction data by a user input.

12. A computer program product comprising software code portions which, when executed on a processor, cause the processor to execute the method according to any of the preceding claims.

13. A control system (6) for an automation system (1), comprising a processor and a display unit (10), the method according to any of claims 1 to 11 being executed on the processor.

14. The control system (6) according to claim 13, whose display unit (10) is arranged on a mobile unit (12) connected to the automation system (1) and/or further components of the control system (6) by a wireless communication link (14).

## Revendications

1. Procédé de surveillance d'une installation d'automatisation (1) ayant une pluralité de composants (2, 4, 18, 20, 40, 42, 44, 56, 58, 64, 76, 82, 84, 86, 88, 90, 92, 96, 100, 108) comportant :
rendu, par un processeur, d'une image (16, 22, 40, 52, 54, 80) à partir d'une scène tridimensionnelle représentant au moins une partie de l'installation d'automatisation (1), sur la base de données de position et de données de direction d'observation,
représentation de l'image (16, 22, 40, 52, 54, 80) sur une unité d'affichage (10),
**caractérisé par le fait que**
les composants (2, 4, 18, 20, 40, 42, 44, 56, 58, 64, 76, 82, 84, 86, 88, 90, 92, 96, 100, 108) sont répartis sur une pluralité d'étages (24, 26, 28) de l'installation d'automatisation (1) et les composants (2, 4, 18, 20, 40, 42, 44, 56, 58, 64, 76, 82, 84, 86, 88, 90, 92, 96, 100, 108) sont disposés dans la scène tridimensionnelle chacun sur un étage (24, 26, 28),
un élément d'entrée associé aux étages (24, 26, 28) est prévu,
dans lequel, en réponse à une entrée sur l'élément d'entrée (22), une distance verticale entre deux étages voisins (24, 26, 28) dans la scène tridimensionnelle est modifiée, et dans lequel
des trajets de matériel (60, 94) entre des composants (2, 4, 18, 20, 40, 42, 44, 56, 58, 64, 76, 82, 84, 86, 88, 90, 92, 96, 100, 108) de l'installation d'automatisation (1) sont représentés en tant que lignes dans la scène, au moins une ligne représentant un trajet de matériel (60, 94) entre les étages voisins (24, 26, 28), et dans lequel, lorsque la distance verticale entre les deux étages voisins (24, 26, 28) dans la scène tridimensionnelle est modifiée, également la longueur de la ligne est modifiée en conséquence.

2. Procédé selon la revendication 1, dans lequel, au moyen de l'élément d'entrée (22), l'un des étages (24, 26, 28) est sélectionnable et la distance verticale de l'étage sélectionné (24, 26, 28) à l'étage (24, 26, 28) du dessus est modifiée.

3. Procédé selon la revendication 2, dans lequel l'élément d'entrée (22) comporte un indicateur stationnaire (30) et une échelle de sections (32) déplaçable au-dessous, dans lequel un étage (24, 26, 28) est associé à chacune des sections (34, 36, 38), et un étage (24, 26, 28) est sélectionné en ce que la section (34, 36, 38) associée à cet étage (24, 26, 28) est déplacée au-dessous de l'indicateur (30).

4. Procédé selon l'une des revendications 2 ou 3, dans lequel la distance verticale est augmentée par rapport à la distance à l'échelle.

5. Procédé selon l'une des revendications précédentes, dans lequel toute distance verticale est réglée à l'intérieur d'une région prédéterminée au moyen de l'élément d'entrée (22).

6. Procédé selon l'une des revendications précédentes, dans lequel la position courante d'un matériel (62) sur les trajets de matériel (60, 94) est représentée dans la scène.

7. Procédé selon l'une des revendications précédentes, dans lequel les données de position sont déterminées automatiquement dans une distance fixe par rapport à la position courante du matériel (62).

8. Procédé selon l'une des revendications précédentes, dans lequel lors d'une entrée utilisateur, la distance de parties (78) d'un composant (2, 4, 18, 20, 40, 42, 44, 56, 58, 64, 76, 82, 84, 86, 88, 90, 92, 96, 100, 108) entre elles dans la scène tridimensionnelle est augmentée.

9. Procédé selon l'une des revendications précédentes, dans lequel un graphique tridimensionnel (110) est disposé dans la région d'un composant (2, 4, 18, 20, 40, 42, 44, 56, 58, 64, 76, 82, 84, 86, 88, 90, 92, 96, 100, 108) dans la scène tridimensionnelle, le graphique (110) contenant une représentation courante d'une courbe caractéristique bidimensionnelle (115) du composant (2, 4, 18, 20, 40, 42, 44, 56, 58, 64, 76, 82, 84, 86, 88, 90, 92, 96, 100, 108) conjointement avec des représentations historiques de la courbe caractéristique (115) qui sont disposées l'une derrière l'autre dans la troisième dimension.

10. Procédé selon l'une des revendications précédentes, dans lequel un objet de liaison (70) est disposé dans la région d'un composant (2, 4, 18, 20, 40, 42, 44, 56, 58, 64, 76, 82, 84, 86, 88, 90, 92, 96, 100, 108) dans la scène tridimensionnelle, où, lorsque l'objet de liaison (70) est coché dans l'image rendue, une vue bidimensionnelle (72) du composant (2, 4, 18, 20, 40, 42, 44, 56, 58, 64, 76, 82, 84, 86, 88, 90, 92, 96, 100, 108) est représentée.

11. Procédé selon l'une des revendications précédentes, dans lequel les étapes de procédé de rendu et de représentation sont réalisées à nouveau après chaque changement des données de position ou des données de direction d'observation par une entrée utilisateur.

12. Produit de programme d'ordinateur, lequel comporte des parties de code de logiciel qui, lorsqu'elles sont exécutées sur un processeur, amènent le processeur à exécuter le procédé selon l'une des revendications précédentes.

13. Système de commande (6) pour une installation d'automatisation (1), comportant un processeur et une unité d'affichage (10), dans lequel le procédé selon l'une des revendications 1 à 11 est exécuté sur le processeur.

14. Système de commande (6) selon la revendication 13, dont l'unité d'affichage (10) est disposée sur une unité (12) mobile, connectée à l'installation d'automatisation (1) et/ou à d'autres composants du système de commande (6) par une liaison de communication sans fil (14).
